# EUROPEAN PATENT SPECIFICATION

(11) **EP 0 666 886 B1**
(45) Date of publication and mention of the grant of the patent: **04.03.1998**
(21) Application number: 93924866.2
(22) Date of filing: 01.11.1993
(51) Int. Cl.: C08L 95/00

(54) **BITUMEN EMULSION, ITS PREPARATION AND USE AND BREAKING ADDITIVE FOR USE THEREIN**
BITUMENEMULSION, DESSEN HERSTELLUNG UND ANWENDUNG UND SPALTZUSATZ ZUR ANWENDUNG HIERIN
EMULSION DE BITUME, PREPARATION ET UTILISATION DE LADITE EMULSION ET ADDITIF DE RUPTURE A UTILISER DANS LADITE EMULSION

(30) Priority: 02.11.1992 SE 9203228
(43) Date of publication of application: 16.08.1995
(73) Proprietor: AKTIEBOLAGET NYNÄS PETROLEUM, S-121 23 Johanneshov (SE)
(72) Inventor: REDELIUS, Per, G., S-149 30 Nynäshamn (SE); UHLBÄCK, Petri, S-149 45 Nynäshamn (SE); JAMES, Allan, D., Rochdale, Lancashire (GB); STEWART, David, Lymm, Cheshire (GB); GASTMANS, André, C., C., B-2510 Mortsel (BE)
(74) Representative: Fogelberg, Lennart
(86) International application number: SE9300912
(87) International publication number: WO9410247

(56) References cited:
- EP-A- 0 491 107
- DD-A- 95 072
- GB-A- 2 208 270
- SE-B- 453 760
- US-A- 4 148 744

## Description

The present invention relates to a bitumen emulsion, a process for its preparation, a breaking additive intended for use in the bitumen emulsion and the use of the bitumen emulsion and of a suspension of a solid in oil. More pedifically, the present invention relates to a bitumen emulsion of an anionic or cationic type having a breaking additive, a breaking additive intended for use in the bitumen emulsion, the use of the bitumen emulsion as a binder in road building, road maintenance, recycling of old asphalt pavings or construction work, and the use of a breaking solid in oil as a breaking additive in a bitumen emulsion.

A great number of methods for the breaking of bitumen emulsions are known. However, they all suffer from the disadvantage that the breaking occurs immediately. In order to enable the use of bitumen emulsions for e.g. the manufacture of asphalt mixes it will be necessary to achieve a controlled delayed breaking. In this way a very stable bitumen can be used, which gives a good covering of the stone material, which allows mixing and paving as well as compaction without breaking.

Once the compaction having been carried out, the emulsion should break as fast as possible in order to avoid breakdown of the traffic. Another reason why a rapid breaking is desired is that cold asphalt mix made with emulsion is sensitive to water (i.e. rain) before the emulsion is broken.

One way to achieve this is disclosed by European Patent Application No 90850415.2. This method utilizes a breaking additive, which comprises a water-in-oil emulsion, in which an aqueous solution of a neutralizing salt is dispersed in a continuous oil phase. Thus this process is based on the use of water-soluble substances in order to achieve the breaking.

It is an object of the present invention to provide a bitumen emulsion in which it is possible to use solids instead of aqueous solutions, which solids are known per se to break bitumen emulsions. However, bitumen emulsions will break immediately on the addition of such substances thereto. The problem has been to achieve a delayed breaking in order to permit paving and compaction before solidifying.

According to the present invention it has now been found that this problem can be solved by making a suspension of the solid breaking material as a breaking controlling additive which is mixed into the bitumen emulsion just before the wanted moment of breaking. The oil film then delays the contact between the breaking material and the bitumen emulsion.

In accordance with the above the present invention thus relates to a bitumen emulsion of an anionic or cationic type having a breaking additive, which bitumen emulsion is characterized in that the breaking additive has been added to the emulsion in the form of a suspension of a breaking solid in oil.

According to an embodiment of the invention the emulsion is of the cationic type, in which case, for instance, the following alkaline materials can be used as breaking chemicals: Calcium hydroxide, calcium oxide, alkali metal tetraborate, alkali metal carbonate, alkali metal metasilicate, cement (STS cement P), alkali metal salts of sulphonated lignin, magnesium carbonate and magnesium hydroxide.

The term "alkali metal" as used above is intended to denote sodium and potassium, preferably sodium. Examples of a sodium salt of sulphonated lignin is Diwatex 30 from Holmen Kemi.

The period of delay can be varied to some extent by selecting different oils for the suspension. The selection of the oil is of great importance to the stability of the suspension. According to the present invention the oils which are used in this connection can be selected from mineral oils, synthetic oils and vegetable oils.

The principle of allowing the oil film to delay the contact between an emulsion breaking solid and a bitumen emulsion car also be utilized if an emulsion of the suspension in water is made. Hence in accordance with an embodiment of the present invention the suspension of solid in oil is added as an emulsion in water. In this case, however, water-soluble salts cannot be used as breaking chemical since these will leach out through the oil film into the continuous aqueous phase. When such a breaking emulsion is mixed with the bitumen emulsion an immediate breaking is obtained, which is not desirable.

According to another aspect of the invention this relates to an breaking additive for use in a bitumen emulsion according to the invention, which breaking additive is characterized in that it comprises a suspension of a water-insoluble breaking solid in oil, which suspension is emulsified in water.

The bitumen emulsion according to the present invention is prepared by a process, which is characterized in the following steps
a) preparing a suspension of a breaking solid in oil,
b) mixing the suspension with a bitumen emulsion of an anionic or cationic type,
the suspension optionally being emulsified in water before step b).

The invention also relates to the use of a bitumen emulsion according to the invention in road building, road maintenance, recycling of old asphalt pavings or in construction work such as roofing, coating and water-proofing.

The invention also relates to the use of a suspension of a breaking solid in oil as a breaking additive in a bitumen emulsion of an anionic or cationic type having a breaking additive.

The invention will be further described in the following by means of a number of working examples.

### Example 1

A suspension consisting of 49% of calcium hydroxide in a naphthenic distillate (viscosity at 40°C 32mm²/s, carbon type analysis C_{A}=30%, C_{N}=30%, C_{P}=45%) is made by dispersing by means of a high speed mixer of the type Ultraturrax®, When 2% of the above suspension is added to a bitumen emulsion BE65/5000 (Nynäs Bitumen AB) a well-broken emulsion is obtained in which water has separated within 20 hours.

In order to further investigate the effect of the breaking additive a so-called run off and wash off test was performed. The test is carried out in the following way: A certain amount of breaking additive is added to a bitumen emulsion. The emulsion is then mixed with stone material which has become moistened with water. The mixture is mixed for 30 seconds and then poured into a funnel having a wire netting at its bottom. Liquid which flows out from the funnel during 30 minutes is collected. The water is evaporated and the residue is reported as "Run off" expressed as percent binding agent calculated on the amount of binding agent added. The mix is left in the funnel for additional 30 minutes, whereafter 200 ml of water is poured over the mass. The water is collected and evaporated. The residue is weighed and reported as "Wash off" in percent of binding agent added.

2% of the suspension above was added to a bitumen emulsion P91-212-01 (Nynäs Bitumen AB). 500 g of stone material (granite from Farsta; composition 52% 4-8 mm, 13% 2-4 mm and 35% 0-2 mm) were moistened with 20 g of water. 40 g of the above emulsion were added thereto. The mixture was poured into a funnel for measuring of "Run off" and "Wash off" according to the above.

Results: Run off: 0%, Wash off: 0.8%. The results can be compared with the case when no breaking suspension is added: Run off: 5%, Wash off: 11%.

### Example 2

A suspension consisting of 38% of sodium metasilicate in a naphthenic distillate (viscosity at 40°C 200 mm²/s, carbon type analysis C_{A}=25%, C_{N}=30%, C_{P}=45%) is made by dispersing by means of a high speed mixer of the type Ultraturrax®. When 2% of the above suspension are added to a bitumen emulsion BE 65/5000 a broken emulsion is obtained, wherein the water has not separated within 24 hours.

2% of the above suspension were added to a bitumen emulsion P91-212-01 and tests confirming "Run off" and "Wash off" were carried out in the same way as in Example 1.

Results: Run off: 0%, Wash off: 0%.

### Example 3

A suspension consisting of 68% of cement in a naphthenic distillate (viscosity 32 mm²/s at 40°C) is made by dispersing by means of a high speed mixer of the type Ultraturrax®. The suspension is then emulsified in water. The emulsion has the following composition: 47% of cement suspension, 47% of water, 3% of emulsifier Berol 79 and 3% of emulsifier Berol 540 (both emulsifiers from Berol Nobel AB).

3,5% of the emulsion above was added to a bitumen emulsion P91-212-01. 40 g of the mixture were added to 500 g of moist stone material (as in Examples 1 and 2). The mixture was stirred for 30 seconds and poured into a funnel to test "Run off" and "Wash off".

Results: Run off: 0%; Wash off: 0.9%.

## Claims

1. Bitumen emulsion of an anionic or cationic type having a breaking additive, characterized in that the breaking additive has bee added to the emulsion in the form of a suspension of a breaking solid in oil.

2. Bitumen emulsion according to claim 1, characterized in that the emulsion is of the cationic type.

3. Bitumen emulsion according to claim 2, characterized in that the solid phase comprises calcium hydroxide, calcium oxide, alkali metal tetra borate, alkali metal carbonate, alkali metal metasilicate, cement, alkali metal salt of sulphonated lignin, magnesium carbonate or magnesium hydroxide.

4. Bitumen emulsion according to any of claims 1-3, characterized in that the oil is a mineral oil, a synthetic oil or a vegetable oil.

5. Bitumen emulsion according to any of claims 1-4, characterized in that the suspension in oil is added as an emulsion in water.

6. Breaking additive for use in a bitumen emulsion according to any of claims 1-5, characterized in that it comprises a suspension of a water-insoluble breaking solid in oil, which suspension is emulsified in water.

7. Process for the preparation of a bitumen emulsion according to any claims 1 to 5, characterized
a) in preparing a suspension of a breaking solid in oil,
b) mixing the suspension with a bitumen emulsion of an anionic or cationic type,
the suspension optionally being emulsified in water before step b), in which case the breaking solid is one which is water-insoluble

8. The use of a bitumen emulsion according to any of claims 1-5 in road building, road maintenance or recycling of old asphalt pavings.

9. The use of a bitumen emulsion according to any of claims 1-5 in construction work such as roofing, coating and water-proofing.

10. The use of a suspension of a breaking solid in oil as a breaking additive in a bitumen emulsion of an anionic or cationic type having a breaking additive.

## Patentansprüche

1. Bitumenemulsion anionischen oder kationischen Typs enthaltend einen Spaltzusatz, dadurch gekennzeichnet, daß der Spaltzusatz zu der Emulsion in Form einer Suspension eines brechenden Feststoffs in Öl hinzugefügt wurde.

2. Bitumenemulsion gemäß Anspruch 1, dadurch gekennzeichnet, daß die Emulsion kationischen Typs ist.

3. Bitumenemulsion gemäß Anspruch 2, dadurch gekennzeichnet, daß die feste Phase Calciumhydroxid, Calciumoxid, Alkalimetalltetraborat, Alkalimetallcarbonat, Alkalimetallmetasilikat, Zement, ein Alkalimetallsalz von sulfoniertem Lignin, Magnesiumcarbonat oder Magnesiumhydroxid umfaßt.

4. Bitumenemulsion gemäß einem der Ansprüche 1 bis 3, dadurch gekennzeichnet, daß das Öl ein Mineralöl, ein synthetisches Öl oder ein Pflanzenöl ist.

5. Bitumenemulsion gemäß einem der Ansprüche 1 bis 4, dadurch gekennzeichnet, daß die Suspension in Öl als Emulsion in Wasser hinzugefügt wird.

6. Spaltzusatz zur Verwendung in einer Bitumenemulsion gemäß einem der Ansprüche 1 bis 5, dadurch gekennzeichnet, daß dieser eine Suspension eines wasserunlöslichen brechenden Feststoffs in Öl, wobei die Suspension in Wasser emulgiert ist, umfaßt.

7. Verfahren zur Herstellung einer Bitumenemulsion gemäß einem der Ansprüche 1 bis 5, gekennzeichnet durch
a) das Herstellen einer Suspension eines brechenden Feststoffs in Öl,
b) das Mischen der Suspension mit einer Bitumenemulsion anionischen oder kationischen Typs,
wobei die Suspension optional vor Schritt b) in Wasser emulgiert wird, wobei dann der brechende Feststoff ein wasserunlöslicher ist.

8. Verwendung einer Bitumenemulsion gemäß einem der Ansprüche 1 bis 5 im Straßenbau, in der Straßeninstandhaltung oder beim Recycling von alten Asphaltpflasterungen.

9. Verwendung einer Bitumenemulsion gemäß einem der Ansprüche 1 bis 5 für Bauarbeiten wie Dachdeckerarbeiten, Anstrichen und Abdichten gegen Wasser.

10. Verwendung einer Suspension eines brechenden Feststoffs in Öl als Spaltzusatz in einer Bitumenemulsion anionischen oder kationischen Typs enthaltend einen Spaltzusatz.

## Revendications

1. Emulsion de bitume de type anionique ou cationique ayant un additif de rupture, caractérisée en ce que l'additif de rupture est ajouté à l'émulsion sous la forme d'une suspension d'un solide de rupture dans de l'huile.

2. Emulsion de bitume selon la revendication 1, caractérisée en ce que l'émulsion est de type cationique.

3. Emulsion de bitume selon la revendication 2, caractérisée en ce que la phase solide comprend l'hydroxyde de calcium, l'oxyde de calcium, un tétra-borate de métal alcalin, un carbonate de métal alcalin, un métasilicate de métal alcalin, du ciment, un sel de métal alcalin de lignine sulfonée, du carbonate de magnésium ou de l'hydroxyde de magnésium.

4. Emulsion de bitume selon l'une quelconque des revendications 1 à 3, caractérisée en ce que l'huile est une huile minérale, une huile synthétique ou une huile végétale.

5. Emulsion de bitume selon l'une quelconque des revendications 1 à 4, caractérisée en ce que la suspension dans l'huile est ajoutée sous forme d'une émulsion dans l'eau.

6. Additif de rupture destiné à être utilisé dans une émulsion de bitume selon l'une quelconque des revendications 1 à 5, caractérisé en ce qu'il comprend une suspension dans de l'huile d'un solide de rupture insoluble dans l'eau, laquelle suspension est émulsifiée dans l'eau.

7. Procédé d'obtention d'une émulsion de bitume selon l'une quelconque des revendications 1 à 5, caractérisé en ce qu'il consiste:
a) à préparer une suspension d'un solide de rupture dans de l'huile;
b) à mélanger la suspension avec une émulsion de bitume de type anionique ou cationique,
la suspension étant facultativement émulsifiée dans l'eau avant l'étape b), auquel cas le solide de rupture est un de ceux qui sont insolubles dans l'eau.

8. L'utilisation d'une émulsion de bitume selon l'une quelconque des revendications 1 à 5 dans la construction de route, l'entretien de route ou le recyclage de revêtements d'asphalte usagé.

9. L'utilisation d'une émulsion de bitume selon l'une quelconque des revendications 1 à 5 dans un ouvrage de construction comme un revêtement de toit, un enrobage et une étanchéité à l'eau.

10. L'utilisation d'une suspension d'un solide de rupture dans de l'huile comme additif de rupture dans une émulsion de bitume de type anionique ou cationique renfermant un additif de rupture.
